# EUROPÄISCHE PATENTSCHRIFT

(11) **EP 1 302 084 B1**
(45) Veröffentlichungstag und Bekanntmachung des Hinweises auf die Patenterteilung: **03.11.2004**
(21) Anmeldenummer: 01955236.3
(22) Anmeldetag: 11.07.2001
(51) Int. Cl.: H04Q 7/22

(54) **VERFAHREN ZUM SCHNELLEN ZUWEISEN VON FUNK-RESSOURCEN ZU LOGISCHEN KANÄLEN IN ABWÄRTSRICHTUNG**
METHOD FOR RAPIDLY ALLOCATING RADIO RESOURCES TO LOGICAL CHANNELS IN A DOWN-LINK DIRECTION
PROCEDE D'AFFECTATION DE RESSOURCES RADIO A DES CANAUX LOGIQUES DANS LE SENS DESCENDANT

(30) Priorität: 14.07.2000 DE 10034248
(43) Veröffentlichungstag der Anmeldung: 16.04.2003
(73) Patentinhaber: SIEMENS AKTIENGESELLSCHAFT, 80333 München (DE)
(72) Erfinder: MENZEL, Christian, 82216 Maisach (DE)
(86) Internationale Anmeldenummer: PCT/DE2001/002581
(87) Internationale Veröffentlichungsnummer: WO 2002/007463

(56) Entgegenhaltungen:
- EP-A- 1 005 243
- WO-A-99/41918
- US-A- 5 768 267
- US-A- 6 031 832

## Beschreibung

Die Erfindung betrifft ein ein Verfahren zum schnellen Zuweisen von Funk-Ressourcen zu logischen verbindungsindividuellen Kanälen bei einer Datenübertragung in Abwärtsrichtung, sowie eine Basisstation und eine Funkstation zur Durchführung des Verfahrens.

In Funk-Kommunikationssystemen werden Informationen, beispielsweise Sprache, Bildinformationen oder andere Daten, mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMAoder TD/CDMA-Übertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Sowohl im derzeit üblichen GSM-Standard (GSM: Global System for Mobile Communication) als auch im UMTS- oder UTRAN-Standard (UTRAN: Universal Terrestrial Radio Access Network) mit TDD- und FDD-Übertragungsmodi (T/FDD: Time/Frequency Division Duplex) sollen zukünftig insbesondere für Sprachübertragungen sogenannte Echtzeit-Daten über paketorientierte Verbindungen übertragen werden. Unter Echtzeit-Daten werden Daten verstanden, die so wenig wie möglich durch Laufzeitverzögerungen, Abschneidungsverluste oder dergleichen beeinträchtigt sind. Dies bedingt, dass solche Echtzeit-Datendienste bei der Übertragung über die Luftschnittstelle in der Regel Vorrang gegenüber Nicht-Echtzeit-Datendiensten haben müssen. Für die Übertragung von Nicht-Echtzeit-Daten stehen insbesondere die Übertragungslücken der Echtzeit-Datendienste zur Verfügung. Insbesondere ist es dazu erforderlich, die Nicht-Echtzeit-Daten gut organisiert und ressourcenschonend übertragen zu können.

Nicht-Echtzeit-Daten (non-realtime data) sind z.B. der typische Internetverkehr mit WorldWideWeb-Anwendungen, Dateiübertragungsprotokollen (FTP) und E-Mail. Die Übertragung von Nicht-Echtzeit-Daten besteht über die Funkschnittstelle z.B. eines Mobilfunksystems wegen der darin enthaltenen Signalisierung und der Eigenschaften der zu übertragenden Nutzdaten aus einer Vielzahl kurzer bis sehr großer Datenpakete. Bei der Übertragung der einzelnen Datenpakete können zwischen diesen zum Teil längere Pausen existieren, wobei deren Übertragung in der Regel nicht sehr zeitkritisch ist. Zumeist sind bei den derzeitigen Systemen Verzögerungen von einigen 100 ms oder mehr akzeptabel. Die Zuweisung eines oder mehrerer dedizierter, also über die Dauer der Einbuchung fest zugeordneter Kanäle (Dedicated Channels) für eine solche Verbindung stellt derzeit eine recht erhebliche Ressourcenverschwendung dar, weil die Übertragungspausen zwischen den einzelnen Transaktionen bezüglich ihrer Dauer nicht vorhersagbar sind und sehr lang werden können.

Das gegenwärtig im TDD-Modus geplante Verfahren benutzt für diese Datenübertragungen gemeinsam verwendete Kanäle, sogenannte Shared Channels, welche von vornherein pro Datenpaket zeitlich begrenzt zugewiesen werden. Mit anderen Worten, die Kapazität der einzelnen gemeinsam verwendeten Kanäle wird jeweils zeitlich beschränkt auf mehrere eingebuchte Teilnehmerstationen aufgeteilt wie z.B im EP-A-1,005,243 offenbart. Während dieser Zuweisungsdauer werden die Ressourcen eines gemeinsam verwendeten Kanals aber exklusiv zugewiesen, wobei sie sich von dedizierten Kanälen nur durch die im vornherein festgelegte Zuweisungsdauer unterscheiden.

Solche Zuweisungen von gemeinsam verwendeten Kanälen, wie auch von dedizierten Kanälen, erfordert sehr große Nachrichten bzw. Mitteilungsblöcke, welche wegen ihrer Größe eine erhebliche Überlast (Overhead) darstellen, insbesondere, wenn das Paket, für welches ein Kanal zugewiesen wurde, sehr klein ist. Die durch diese Zuweisungen verursachte Überlast kann im TDD-Modus derzeit bis zu 50% betragen.

Die Aufgabe der Erfindung besteht darin, ein Verfahren anzugeben, bei welchem die Systembelastung für Übertragungen in Abwärtsrichtungen reduziert wird.

Diese Aufgabe wird durch das Verfahren mit den Merkmalen des Patentanspruchs 1, und durch die Basisstation gemäß den Merkmalen des Patentanspruchs 10 gelöst.

Dass in dem üblichen Mitteilungsblock eine Identifizierungsinformation zur Kennzeichnung der nachfolgenden Übertragung von Daten mitgeteilt wird und dass die Datenübertragung nachfolgend jeweils in einem Signalisierungskanal durch Aussenden der Identifizierungsinformation vor der Datenübertragung angekündigt wird, ermöglicht eine ressourcensparende Information der eingebuchten Teilnehmerstation über für sie nachfolgend eintreffende Daten auf dem Übertragungskanal. Ein erster Schritt ist dabei das Zuweisen der für eine bestimmte eingebuchte (Teilnehmer)-Station eindeutige Identifizierungsinformation. Vor späteren Datenübertragungen müssen die zu übertragenden Daten dann nicht mehr mit aufwendigen Kopfabschnitten angekündigt werden, sondern es genügt die vorherige Signalisierung mittels der Identifizierungsinformation über den Signalisierungskanal.

Vorteilhafterweise wird die Reduzierung der Systembelastung für Übertragungen in Abwärtsrichtungen dadurch erzielt, dass sich mehrere eingebuchte Stationen solche gemeinsam verwende te Ressourcen wirklich teilen anstatt sie zwar nur (längerfristig) befristet und dabei exklusiv zu benutzen. Statt Kanäle für längere Zeiträume fest zuzuweisen, werden somit nur kurzfristig kurze Blöcke innerhalb der Kanäle zugewiesen.

Außerdem müssen das zu übertragende Datenvolumen und die Zeitpunkte der Übertragungen nicht mehr vorher bekannt sein oder abgeschätzt werden. Auch dies lässt Systemressourcen einsparen.

Vorteilhafte Ausgestaltungen sind Gegenstand von abhängigen Ansprüchen.

Die Identifizierungsinformation beim oder nach dem Einbuchvorgang der Teilnehmerstation mitzuteilen rationalisiert den gesamten Verfahrensablauf. Die Identifizierungsinformation erst beim Übergangswunsch der eingebuchten Station zuzuweisen, ermöglicht hingegen eine Optimierung insbesondere für den Fall, dass bestimmte eingebuchte Stationen z.B. im wesentlichen nur für Sprachübertragung eingesetzt werden und nur selten für Dienste, in denen der Einsatz des beschriebenen Verfahrens benötigt wird oder sinnvoll ist. In solchen Fällen kann von der eingebuchten Station dann eine Anforderung für diesen besonderen Übertragungsmodus angefordert werden, wenn ein dafür geeigneter Dienst angefordert wird. Umgekehrt kann die Anforderung auch aus dem Kommunikationsnetz kommen, wenn z.B. eine andere Station an die eingebuchte Station Daten übersenden möchte und diese Daten mit dem beschriebenen Verfahren Ressourcen-schonender übertragbar sind.

Dadurch, dass die nach dem Aussenden der Identifizierungsinformation ausgesendeten Daten keine spezielle Zuordnungsinformation zu der eingebuchten Station enthalten, für die sie bestimmt sind, können aufwendige Signalisierungen und aufwendige Kopfabschnitte entfallen.

Als Signalisierungskanal einen vom Übertragungskanal physikalisch getrennten Kanal zu verwenden, ermöglicht die Einrichtung eines einfach eingerichteten Kanals oder auch die Verwendung freier Kapazitäten in bereits eingerichteten oder anderen Signalisierungskanälen. Insbesondere benötigen Einrichtung und Betrieb eines' speziellen Signalisierungskanals weniger Ressourcen und Aufwand als das jeweilige Übersendungen der für sich bekannten Mitteilungsblöcke zur Zuweisung von Ressourcen. Der Zusatzaufwand durch den benötigten Signalisierungskanal ist deutlich geringer, wenn der Anteil an Nicht-Echtzeit-Datenübertragungen entsprechend hoch ist, wie dies für TDD angenommen wird.

Mit der Identifizierungsinformation auf einen oder mehrere physikalische Ressourcen des geteilten Übertragungskanals zu verweisen bietet die Möglichkeit, einer eingebuchten Station Daten über zeitlich parallele Ressourcen auf verschiedenen Kanälen zu übertragen, wodurch die Übertragungsbandbreite und Übertragungsgeschwindigkeit entsprechend gegenüber einer Übertragung über einen einzelnen Kanal erhöht werden.

Die Zuweisung der Identifizierungsinformation für eine vorgegebene Zeitdauer, insbesondere einige Sekunden bis zu einigen Minuten, und auch die Unterteilung in Übertragungsperioden ermöglichen eine gleichmäßige Verteilung auf eine Vielzahl an eingebuchten mobilen Stationen, wobei berücksichtigt werden kann, dass in Stoßzeiten während des Tages eine größere Anzahl von eingebuchten Stationen mit Daten zu versorgen ist, als z.B. in Nachtzeiten.

Zumindest alle für die Betriebsart mit gemeinsam verwendeten Übertragungskanal genutzten Abwärtsverbindungs-Ressourcen durchzunumerieren ermöglicht insbesondere bei einer entsprechenden Aufnahme in den System-Standard eine rationelle Zuweisung der Identifizierungsinformationen über den Signalisierungskanal.

Insbesondere können freie Übertragungskanäle und Übertragungsressourcen schnell den eingebuchten Teilnehmerstationen mit verschiedenen Anforderungen an die Dienstequalität (QoS) zugewiesen werden, wobei die Zuweisungen schnell erfolgen bzw. gewechselt werden können. Insbesondere ist auch eine Mischung mit Echtzeit-Daten einfach realisierbar.

Vorteilhafterweise ist eine Anwendung bei allen denkbaren Kommunikationssystemen möglich, bei denen in der Abwärtsverbindungsrichtung zeitweilige Datenübertragungen erfolgen.

Ein Ausführungsbeispiel wird nachfolgend anhand der Zeichnung näher erläutert. Es zeigen:
- Fig. 1: ein beispielhaftes Funk-Kommunikationssystem mit zwei mit einer Basisstation kommunizierenden mobilen Stationen,
- Fig. 2: schematisch eine Darstellung des Ablaufs der Übertragung von Signalisierungsinformationen und Daten und
- Fig. 3: ein Schema zur Zuweisung der Ressourcen einzelner physikalischer Kanäle eines logischen Kanals auf verschiedene Teilnehmerstationen zu verschiedenen Zeitpunkten.

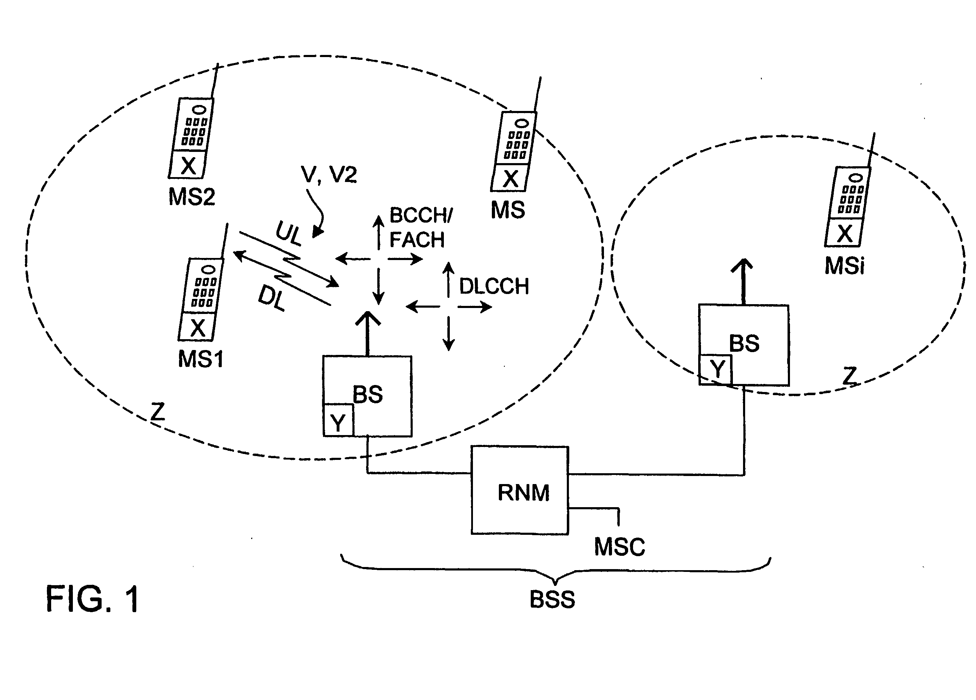

Das in Fig. 1 dargestellte Mobilfunksystem als Beispiel eines bekannten Funk-Kommunikationssystems besteht aus einer Vielzahl von Netzelementen, insbesondere von Mobilvermittlungsstellen MSC, Einrichtungen RNM zum Zuteilen von funktechnischen Ressourcen, Basisstationen BS und in der untersten Hierarchieebene Teilnehmerstationen MS.

Die Mobilvermittlungsstellen MSC, die untereinander vernetzt sind und von denen hier nur eine dargestellt ist, stellen den Zugang zu einem Festnetz oder einem anderen Funknetz her. Weiterhin sind diese Mobilvermittlungsstellen MSC mit jeweils zumindest einer der Einrichtungen RNM zum Zuteilen von funktechnischen Ressourcen verbunden. Jede dieser Einrichtungen RNM ermöglicht wiederum eine Verbindung zu zumindest einer Basisstation BS, BS2. Eine solche Basisstation BS kann über eine Funkschnittstelle V bzw. V2 eine Verbindung zu Teilnehmerstationen, z.B. mobilen Stationen MS, MS1 bzw. MS2 oder anderweitigen mobilen und stationären Endgeräten aufbauen. Durch jede Basisstation BS, BS2 wird zumindest eine Funkzelle Z gebildet. Bei einer Sektorisierung oder bei hierarchischen Zellstrukturen werden pro Basisstation BS, BS2 auch mehrere Funkzellen Z versorgt.

In Fig. 1 sind beispielhaft bestehende Verbindungen V, V2 als Abwärtsverbindungen DL und Aufwärtsverbindungen UL zur Übertragung von Nutzinformationen und Signalisierungsinformationen zwischen einer mobilen Teilnehmerstation MS, MS1 bzw. MS2 und den entsprechend mit diesen in Verbindung stehenden Basisstationen BS bzw. BS2 dargestellt. Weiterhin ist jeweils ein Organisationskanal (FACH oder BCCH: Broadcast Control CHannel) dargestellt, der zur Übertragung von Nutz- und Signalisierungsinformationen mit einer definierten Sendeleistung von jeder der Basisstationen BS bzw. BS2 für alle mobilen Stationen MS bzw. MS2 im Bereich der entsprechenden Funkzelle Z bereitgestellt wird.

Wie aus Fig. 1 ersichtlich, werden gemäß dem dargestellten Ausführungsbeispiel zumindest ein Abwärtsverbindungs-Steuerkanal DLCCH (DownLink Control CHannel) und verfahrensgemäß darüber zu übertragende Kennzeichnungsinformationen eingeführt, die nachfolgend als Kurzidentifizierer DSF (Downlink State Flags) bezeichnet werden.

In bekannter Weise bucht sich eine in einer Zelle Z in Betrieb genommene Teilnehmerstation MS bei der zuständigen Basisstation BS ein. Dabei geht sie von einem untätigen Zustand in einen Bereitschaftszustand über, in dem sie über ihre internationale Teilnehmer-Identifikationsnummer von einer anderen Telekommunikationseinrichtung aus anrufbar ist.

Gemäß dem vorliegenden Ausführungsbeispiel wird der Teilnehmerstation MS ein Kurzidentifizierer DSF zugewiesen, sobald die Teilnehmerstation MS bei einer Betriebsart mit gemeinsam verwendetem Kanal (Shared Channel Mode) in den Abwärtsverbindungsbetrieb übergehen möchte. Dieser Übergangswunsch kann z.B. signalisiert werden, wenn die Teilnehmerstation MS einen Dienst mit einer hohen Dienstequalität (QoS) benötigt und anfordert.

Alternativ ist aber auch generell die Zuweisung eines Kurzidentifizierers DSF möglich, sobald sich eine Teilnehmerstation MS mit der Fähigkeit zur Verwaltung eines Kurzidentifizierers DSF bei einer Basisstation BS anmeldet, die Kurzidentifizierer verwalten kann. Die Zuweisung eines Kurzidentifizierers DSF kann z.B. auch auf Initiative der Basisstation BS erfolgen, wenn z.B. eine Verbindung mit hoher Dienstequalität auf Anforderung einer fremden Teilnehmerstation zu der eingebuchten Teilnehmerstation MS aufzubauen ist.

Dieser Übergang in die Betriebsart mit gemeinsam verwendetem Kanal wird insbesondere durch solche größeren Nachrichten bzw. Mitteilungen (Messages) signalisiert, wie sie zur Signalisierung für sich genommen bekannt sind. Dabei wird der Teilnehmerstation MS zumindest ein Kurzidentifizierer DSF bzw. im allgemeinen genau ein Kurzidentifizierer DSF zugewiesen. Diese Zuweisung besitzt vorteilhafterweise eine längerfristige Gültigkeit, von vorzugsweise einigen Sekunden bis zu einigen Minuten. Bei derzeitigen Systemen ist eine Gültigkeit von nicht weniger als 300 ms Dauer besonders vorteilhaft.

Nachdem die mobile Teilnehmerstation MS in die Betriebsart mit gemeinsam verwendetem Kanal gewechselt hat, beginnt sie, solange sie sich in dieser Betriebsart befindet, dauerhaft auf den Abwärtsverbindungs-Steuerkanal DLCCH zu hören. Dessen Position hat die Teilnehmerstation MS z.B. in der den Übergang einleitenden bzw. triggernden Nachricht erfahren.

Vorzugsweise werden entweder alle oder zumindest alle für die Betriebsart mit gemeinsam verwendetem Kanal genutzten Abwärtsverbindungs-Ressourcen der Funkzelle Z durchnumeriert. Diese Numerierung wird den in der Betriebsart mit gemeinsam verwendetem Kanal befindlichen mobilen Teilnehmerstationen MS bekannt gegeben.

Weiterhin wird die Übertragung auf die gemeinsam verwendeten Kanäle vorteilhafterweise in Übertragungsperioden unterteilt. Diese Übertragungsperioden können sich z.B. aus dem Abstand aufeinanderfolgender Aussendungen auf dem Abwärtsverbindungs-Steuerkanal DLCCH ergeben, indem sie z.B. gleich diesem Abstand sind oder auch ein Vielfaches dieses Abstandes betragen. Typische Längen für solche Übertragungsperioden sind derzeit im TDD-System 10 ms, 20 ms, 40 ms, 80 ms oder 160 ms.

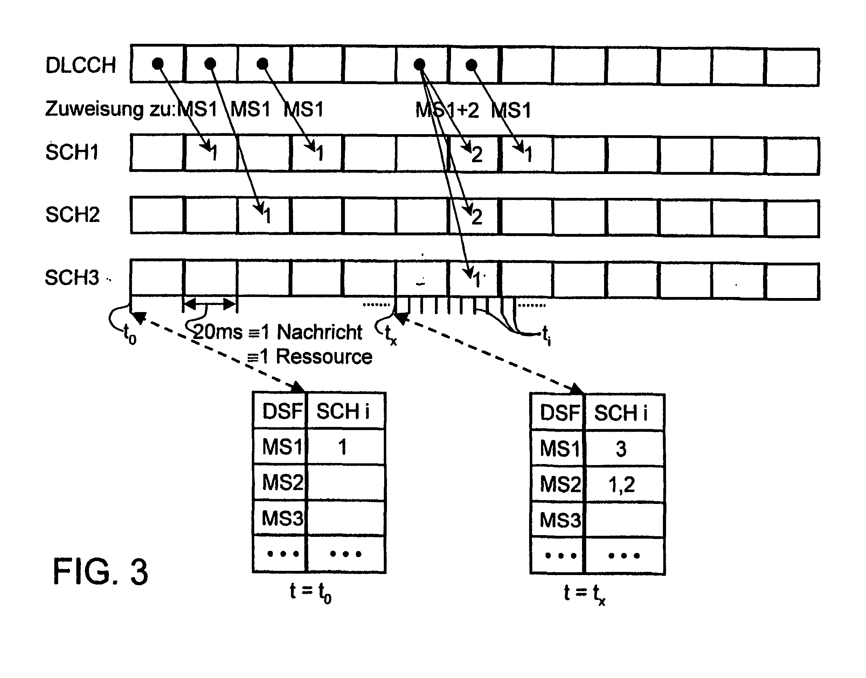

Im Abwärtsverbindungs-Steuerkanal DLCCH werden nun fortlaufend Zuordnungen zwischen den Ressourcennummern der gemeinsam verwendeten Kanäle und den Kurzidentifizierern DSFs ausgesendet, welche für die nachfolgende Übertragungsperiode gültig sind. Sie besagen, wie auch aus Fig. 3 ersichtlich ist, dass an diejenige mobile Teilnehmerstation MSi, deren Kurzidentifizierer DSF der Ressourcennummer tᵢ des gemeinsam verwendeten Kanals zugeordnet wurde, während der nächsten Übertragungsperiode in der Ressource mit der Nummer tₓ Daten gesendet werden. Dabei weist ein sogenannter logischer Kanal u.a. den Steuerkanal DLCCH und hier drei gemeinsam verwendete physikalische Datenkanäle SCH1, SCH2 und SCH3 auf. Die Datenkanäle sind in Zeitschlitze tᵢ unterteilt, wobei im dargestellten Ausführungsbeispiel je vier Zeitschlitze tₓ eine Nachricht bzw. einen Nachrichtenblock bilden, der als Ressource mit der Ressourcennummer tᵢ gleich dessen erster Zeitschlitznummer tᵢ einer Teilnehmerstation MSᵢ zuteilbar ist. Pro Zeitschlitz tᵢ wird bei z.B. dem TDD-System je ein Burst versendet.

Mit der Zuweisung des Kurzidentifizierers DSF zu einer Teilnehmerstation MSi kann dieser Teilnehmerstation MSi auch die Information übermittelt werden, dass die Teilnehmerstation MSi nach dem Empfang des ihr zugewiesenen Kurzidentifizierers DSF stets auf die Daten zugreifen soll, die nachfolgend in einem ganz bestimmten, festgelegten der Datenkanäle SCHi übertragen werden.

Vorteilhafterweise können dabei jedoch alle als Ressourcen tᵢ für gemeinsam verwendete Kanäle SCHᵢ zur Verfügung stehenden Ressourcen an beliebige stationäre oder mobile Teilnehmerstationen MS, die sich in der Betriebsart mit gemeinsam verwendetem Kanal befinden, in beliebiger Weise vergeben werden. Durch das so entstehende große Bündel wird der Gesamtdurchsatz erhöht, was zu einem "Bündelgewinn" führt. Dies führt letztendlich zu einer effizienteren Ausnutzung der Funkressourcen einer Zelle Z, weil jede Ressource eines gemeinsam verwendeten Kanals an jede der Nicht-Echtzeit-Verbindungen zugewiesen werden kann und damit die Bildung einzelner "Pools pro Shared Channel Ressource" unterbleibt, wie dies z.B. beim für den GSM-Standard definierten Allgemeinen Paketdaten-Funkdienst GPRS geschieht.

Zusätzlich ist es vorteilhafterweise auch möglich, bei entsprechender Verfügbarkeit von Ressourcen eines gemeinsam verwendeten Kanals SCHi einzelnen Teilnehmerstationen MS während einer Übertragungsperiode mehrere Ressourcen eines gemeinsam verwendeten Kanals gleichzeitig zuzuordnen und somit die Übertragungsbandbreite und -Geschwindigkeit entsprechend zu erhöhen.

Vorteilhafterweise müssen das zu übertragende Datenvolumen und die Zeitpunkte der Übertragungen nicht vorher bekannt sein oder abgeschätzt werden, da der vorstehend beschriebene Mechanismus eine tatsächliche bedarfs- und abrufgesteuerte Vergabe ("on demand") von Ressourcen entsprechend der Verfügbarkeit, des augenblicklich zu übertragenden Datenvolumens und weiterer Kriterien erlaubt, wie z.B. Priorität oder Warteschlangendauer einzelner Datenpakete.

Die vorstehend aufgeführte erwähnte Signalisierungs-Überlast kann dadurch reduziert werden, dass die umfangreiche Zuweisungsnachricht nicht mehr pro Paket sondern nur noch einmal pro Paketübertragungssitzung (Paketsession) übertragen werden muß. Diese kann beliebig lang sein und lange Pausen beinhalten. Der Zusatzaufwand durch den benötigten Abwärtsverbindungs-Steuerkanal DLCCH ist dagegen deutlich geringer, wenn der Anteil an Übertragungen von Nicht-Echtzeit-Daten entsprechend hoch ist, wie dies für TDD erwartet wird.

Da die Zuweisung eines Kurzidentifizierers DSF noch keine Zuweisung einer konkreten Ressource bedeutet, sondern nur die Möglichkeit einer schnellen Ressourcenzuweisung mit geringem Signalisierungsaufwand bedeutet, kann eine Anzahl von Kurzidentifizierern DSF zugewiesen werden, die ein Mehrfaches der verfügbaren Shared Channel Ressourcen beträgt ("Überallokierung"). Für paketartige Nicht-Echtzeit-Daten, wie sie z.B. im Intra- oder Internet-Verkehr üblich sind, ist diese Möglichkeit ein besonderer Vorteil, weil hier die Pausenzeiten in der Regel ein Mehrfaches der Übertragungszeiten pro Paketverbindung betragen und der mögliche Fall der gleichzeitigen Datenübertragungen an z.B. alle Teilnehmerstationen MS durch entsprechend langes Einreihen in Warteschlangen behoben werden kann.

Wenn die Numerierung der Ressourcen nicht nur die Ressourcen des gemeinsam verwendeten Kanals sondern sämtliche Ressourcen der Funkzelle Z umfasst, ist auch eine Mischung mit Echtzeit-Daten möglich. Dabei können während Sprachpausen, welche in Abwärtsverbindungs-Richtung vom Zugriffsnetz, z.B. Basis-Transceiver-Stationen (BTS) recht einfach detektiert werden können, an Stelle der nicht vorhandenen Sprachdaten Nicht-Echtzeit-Daten an eine andere Teilnehmerstation MS übertragen werden, welcher diese Ressource via Abwärtsverbindungs-Steuerkanal DLCCH für eine Übertragungsperiode mitgeteilt wurde. Für die Echtzeit-Datenverbindung werden vorteilhafterweise zusätzliche Einrichtungen oder Verfahrensabläufe eingerichtet, um eine Fehldetektion dieser Daten zu vermeiden.

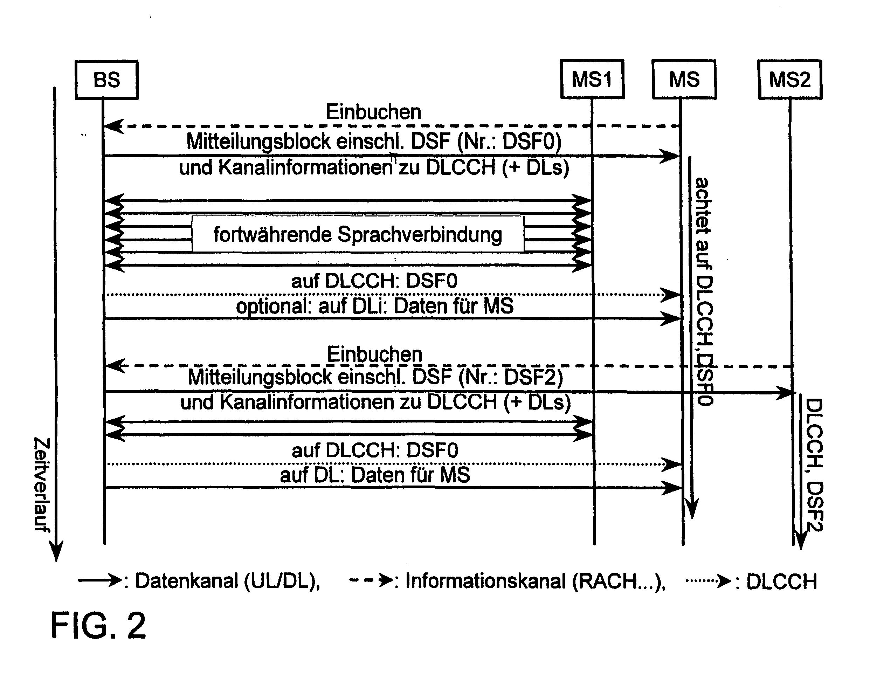

Anhand der Fig. 1 und 2 wird nun ein beispielhafter Verfahrensablauf erläutert. Im Bereich einer Basisstation BS befindet sich eine erste mobile Teilnehmerstation MS1, die bei der Basisstation BS eingebucht ist. Zwischen diesen beiden Stationen besteht eine Sprachverbindung, also eine Echtzeit-Datenübertragung. In den Pausen kann die Basisstation BS den Übertragungskanal vorteilhafterweise auch für die Kommunikation mit anderen Stationen benutzen.

In einer solchen Pause oder über andere Übertragungskanäle wird eine Kommunikationsverbindung mit einer zweiten mobilen Teilnehmerstation MS aufgebaut, die sich bei der Basisstation BS über den Direktzugriffskanal RACH (Random Access CHannel) angemeldet hat. Die Basisstation BS teilt dieser zweiten Teilnehmerstation MS mit, dass diese bzw. deren Signalisierungsüberwachungseinrichtung Y auf die Signalisierung DSF0 auf dem Signalisierungskanal DLCCH achten soll.

In einer späteren Übertragungspause der Verbindung zwischen Basisstation BS und erster Teilnehmerstation MS1 sendet die Basisstation BS bzw. deren Signalisierungs- und Sendeeinrichtung Y über den Signalisierungskanal DLCCH, der von allen entsprechend ausgerüsteten Teilnehmerstationen MS empfangen werden kann, den Kurzidentifizierer bzw. die Signalisierungsinformation DSF0. In einem vorbestimmten Zeitabstand sendet die Basisstation BS zwischenzeitlich empfangene und zwischengespeicherte Daten für die erste Teilnehmerstation MS über den Daten-Übertragungskanal DL. Die Teilnehmerstation MS1 empfängt und verarbeitet diese Daten, da sie zuvor die ihr zugewiesene Signalisierungsinformation DSF0 empfangen hat.

Beim dargestellten Ausführungsbeispiel bucht sich zwischenzeitlich eine dritte Teilnehmerstation MS2 bei der Basisstation BS ein, wobei der dritten Teilnehmerstation MS2 die Signalisierungsinformation DSF2 zugewiesen wird. Eine Datenübertragung zur dritten Teilnehmerstation MS2 ist seitens der Basisstation BS jedoch während des dargestellten Zeitraums nicht erforderlich.

Jedoch werden der zweiten Teilnehmerstation MS zu einem späteren Zeitpunkt nochmals Daten übermittelt.

Bei alternativen Ausführungsform kann zwischen dem Aussenden des Kurzidentifizierers DSF und dem Übermitteln von Daten auf einer darin angegebenen Ressource auch eine vorbestimmbare Zeitdauer verstreichen. Dadurch können bei der empfangenden Station entsprechende Vorbereitungen für den anstehenden Datenempfang getroffen werden.

Fig. 3 zeigt ein Schema zur Zuweisung der Ressourcen einzelner physikalischer Kanäle SCH1 - SCH3 eines logischen Kanals, der durch die Gesamtheit der Kanäle gebildet wird, auf verschiedene Teilnehmerstationen zu verschiedenen Zeitpunkten tᵢ. In der oberen Zeile ist dabei der Signalisierungskanal DLCCH dargestellt, über den die Identifizierungsinformationen in einem für alle eingebuchten und zu dem Verfahren fähigen Teilnehmerstationen MS1, MS2 empfang- und entschlüsselbaren Format und/oder Code übertragen wird.

Darunter sind drei sogenannte physikalische Kanäle SCH1 - SCH3 dargestellt, über welche die Daten übertragen werden, die von bestimmten der Teilnehmerstationen MS1, MS2 empfangen werden sollen.

Sowohl der Signalisierungskanal DLCCH als auch die physikalischen Kanäle SCH1 - SCH3 sind in der Darstellung in Abschnitte unterteilt, die jeweils eine Länge von z.B. 20 ms aufweisen und als Einheiten für die Länge eines typischen Nachrichtenblocks bzw. einer zuweisbaren Ressource auf dem physikalischen Kanal SCH1 - SCH3 anzusehen sind. Diese Ressourcen sind natürlich nicht zwingend auf diese feste Struktur beschränkt und weisen insbesondere auch eine Vielzahl von Zeitschlitzen tᵢ auf.

Beim dargestellten Zeitablauf wird vom Signalisierungskanal DLCCH zu einem ersten dargestellten Zeitpunkt t₀ der ersten Teilnehmerstation MS1 mit Hilfe der Signalisierungs- bzw. Identifizierungsinformation DSF(MS1,1) mitgeteilt, dass die Daten der nächsten Ressource auf dem ersten physikalischen Kanal SCH1 für diese Teilnehmerstation MS1 bestimmt sind.

Dies ist für den Zeitpunkt t = t₀ auch in der ersten Tabelle unterhalb der Kanaldarstellung verdeutlicht. Die erste Spalte umfasst die verfügbaren Kode, hier MS1, MS2, MS3,..., für die Identifizierungsinformation DSF. Die zweite Spalte umfaßt die Zuordnungsinformation zu einem bestimmten physikalischen Kanal SCHi. Über den Signalisierungskanal DLCCH kann somit in einer einfachen Ausführungsform mit nur einem einzigen physikalischen Kanal nur die einfache Identifizierungsinformation DSF bzw. MS1, MS2,... übertragen werden. In der dargestellten Ausführungsform wird aber zusätzlich auch die Information übertragen, auf welchem physikalischen Kanal die Daten übertragen werden, die für die über den Signalisierungskanal DLCCH für die bestimmte Teilnehmerstation MS1 angekündigt werden. Dies zeigt sich bei der zweiten dargestellten Ankündigung, bei der über den Signalisierungskanal der ersten Teilnehmerstation MS1 mitgeteilt wird, dass für diese in der nächsten Ressource des zweiten physikalischen Kanals SCH2 Daten übertragen werden. Daraufhin wird der ersten Teilnehmerstation MS1 hier wieder eine Übertragung im ersten Kanal SCH1 angekündigt.

Danach folgt eine Pause von zwei Zeitblöcken bzw. Ressourcen, in denen von der Basisstation BS aus mit diesem Verfahren keine Daten an die eingebuchten Teilnehmerstationen MS1,... zu übertragen sind.

Im Anschluß an die Pause wird zu einem späteren Zeitpunkt t = tₓ über den Signalisierungskanal SLCCH angekündigt, dass im nächsten Zeitblock über den dritten physikalischen Kanal SCH3 Daten an die erste Teilnehmerstation MS1 und über den ersten und den zweiten physikalischen Kanal Daten an die zweite Teilnehmerstation MS2 zu übertragen sind.

Dies ist für diesen späteren Zeitpunkt t = tₓ auch in der zweiten Tabelle der Fig. 3 aufgelistet. Aus dieser Tabelle ist insbesondere auch ersichtlich, dass bei der Basisstation BS zu diesem Zeitpunkt drei oder mehr Teilnehmerstationen MS1 - MS3,... zum Empfang von Daten nach diesem Verfahren angemeldet sind, obwohl hier nur drei physikalische Kanäle verfügbar sind.

Vorteilhafterweise können also mehr Teilnehmerstationen MSi verwaltet werden, als Ressourcen bzw. physikalische Kanäle verfügbar sind. Außerdem können einer Teilnehmerstation MS2 auch gleichzeitig Daten über mehr als einen Kanal SCH1, SCH2 übermittelt werden.

Teilnehmerstationen zum Durchführen eines vorstehend beschriebenen Verfahrens haben entsprechend eine Einrichtung X zum Speichern, Verwalten und Erkennen von zumindest der Identifizierungsinformation DSF, wobei im Idealfall eine Softwarelösung unter Ausnutzung eines vorhandenen Speicherbereichs und eines vorhandenen Prozessor umsetzbar ist.

## Patentansprüche

1. Verfahren zum Signalisieren einer Datenübertragung von einer Ressourcen eines Übertragungskanals (UL, DL) verwaltenden Basisstation (BS) zu einer dort eingebuchten Teilnehmerstation (MS) bei einer Betriebsart mit gemeinsam verwendetem Übertragungskanal (SCH1, SCH2, SCH3),
- wobei der eingebuchten Teilnehmerstation (MS) vor der Datenübertragung in einem Mitteilungsblock mit einer Vielzahl von Informationen Übertragungsinformationen über nachfolgend zu übertragende Daten übermittelt werden,
**dadurch gekennzeichnet,**
- **dass** in dem Mitteilungsblock eine Identifizierungsinformation (DSF) zur Kennzeichnung der späteren Datenübertragung für eine bestimmte eingebuchte Teilnehmerstation (MS) zugewiesen wird, und
- **dass** nachfolgend (t₀, tₓ) eine solche Datenübertragung jeweils in einem vom Übertragungskanal (SCH1, SCH2, SCH3) physikalisch getrennten Signalisierungskanal (DLCCH) durch Aussenden der Identifizierungsinformation (DSF) vor der eigentlichen Datenübertragung angekündigt wird.

2. Verfahren nach Anspruch 1, bei dem
die Identifizierungsinformation (DSF) beim oder nach dem Einbuchvorgang der eingebuchten Teilnehmerstation (MS) mitgeteilt wird.

3. Verfahren nach Anspruch 1, bei dem
die Identifizierungsinformation (DSF) beim Übergangswunsch der eingebuchten Teilnehmerstation (MS) in das Verfahren mit Datenübertragung nach Zuweisung der Identifizierungsinformation (DSF) zugewiesen wird.

4. Verfahren nach einem vorstehenden Anspruch; bei dem
die ausgesendeten Daten eine Zuordnungsinformation zu der eingebuchten Teilnehmerstation (MS), für die sie bestimmt sind, ausschließlich durch das Aussenden der Identifizierungsinformation (DSF) erhalten.

5. Verfahren nach einem vorstehenden Anspruch, bei dem
mit der Identifizierungsinformation (DSF) auf einen oder mehrere physikalische Ressourcen des gemeinsam verwendbaren Übertragungskanals (SCH1, SCH2, SCH3) verwiesen wird.

6. Verfahren nach einem vorstehenden Anspruch, bei dem
die Zuweisung der Identifizierungsinformation (DSF) für eine vorgegebene Zeitdauer erfolgt, und insbesondere in Ubertragungsperioden unterteilt wird.

7. Verfahren nach einem vorstehenden Anspruch, bei dem
die eingebuchte Teilnehmerstation (MS) nach dem Eintritt in die Betriebsart mit gemeinsam verwendetem Übertragungskanal dauerhaft auf den Signalisierungskanal (DLCCH) hört, solange sie sich in dieser Betriebsart befindet.

8. Verfahren nach einem vorstehenden Anspruch, bei dem zumindest alle für die Betriebsart mit gemeinsam verwendeten Übertragungskanal (SCH1, SCH2, SCH3) genutzten Abwärtsverbindungs-Ressourcen durchnumeriert werden.

9. Verfahren nach Anspruch 8, bei dem
die Nummerierung den in der Betriebsart mit gemeinsam verwendetem Übertragungskanal (SCH1, SCH2, SCH3) befindlichen eingebuchten Teilnehmerstationen (MS) bekannt gegeben wird.

10. Basisstation (BS) eines Funk-Kommunikationssystems, insbesondere zum Durchführen eines Verfahrens nach einem vorstehenden Anspruch, mit
- einer Verwaltungseinrichtung zum Verwalten von Ressourcen eines Übertragungskanals (UL, DL), und
- einer Signalisierungseinrichtung (Y) zum Signalisieren einer Datenübertragung zu zumindest einer weiteren Station (MS) bei einer Betriebsart mit gemeinsam verwendetem Übertragungskanal (SCH1, SCH2, SCH3), wobei dieser weiteren Station (MS) vor der Datenübertragung in einem Mitteilungsblock mit einer Vielzahl von Informationen Übertragungsinformationen über nachfolgend zu übertragende Daten übermittelt werden,
**dadurch gekennzeichnet,**
- **dass** die Signalisierungseinrichtung (Y) zum Eintragen einer Identifizierungsinformation (DSF) zur Kennzeichnung der Übertragung von Daten in dem Mitteilungsblock vor dessen Übertragung ausgebildet ist, und
- **dass** eine Sendeeinrichtung zum Aussenden eines vom Übertragungskanal (DL) physikalisch getrennten Signalisierungskanals (DLCCH) mit Identifizierungsinformation (DSF) zum jeweiligen Signalisieren einer späteren Übertragung von Daten vor der Datenübertragung eingerichtet ist.

## Claims

1. Method for signalling a data transmission from a base station (BS) administering resources of a transmission channel (UL, DL) to a subscriber station (MS) registered there, in an operating mode with a shared transmission channel (SCH1, SCH2, SCH3),
- in which transmission information about data to be subsequently transmitted is transmitted to the registered subscriber station (MS) in a message block with a multiplicity of information items before the data transmission, **characterized in that**
- an identification information item (DSF) for identifying the later data transmission is allocated for a particular registered subscriber station (MS) in the message block, and **in that**
- subsequently (t₀, tₓ), such a data transmission is in each case notified in a signalling channel (DLCCH), physically separated from the transmission channel (SCH1, SCH2, SCH3), by transmitting the identification information item (DSF) before the actual data transmission.

2. Method according to Claim 1, in which the identification information item (DSF) is reported to the registered subscriber station (MS) during or after the registration process.

3. Method according to Claim 1, in which the identification information item (DSF) is allocated when the registered subscriber station (MS) wishes to change to the method with data transmission after the allocation of the identification information item (DSF).

4. Method according to a preceding claim, in which the transmitted data has added to it allocation information for the registered subscriber station (MS) for which it is intended, exclusively through the transmission of the identification information item (DSF).

5. Method according to a preceding claim, in which the identification information item (DSF) is used for referring to one or more physical resources of the shared transmission channel (SCH1, SCH2, SCH3).

6. Method according to a preceding claim, in which the identification information item (DSF) is allocated for a predetermined period of time and, in particular, is subdivided into transmission periods.

7. Method according to a preceding claim, in which, after entering the operating mode with a shared transmission channel, the registered subscriber station (MS) permanently listens to the signalling channel (DLCCH) as long as it is in this operating mode.

8. Method according to a preceding claim, in which at least all the downlink resources used for the operating mode with a shared transmission channel (SCH1, SCH2, SCH3) are sequentially numbered.

9. Method according to Claim 8, in which the numbering is made known to the registered subscriber stations (MS) which are in the operating mode with a shared transmission channel (SCH1, SCH2, SCH3).

10. Base station (BS) of a radio communication system, particularly for carrying out a method according to a preceding claim, comprising
- an administration device for administering resources of a transmission channel (UL, DL), and
- a signalling device (Y) for signalling a data transmission to at least one further station (MS) in an operating mode with a shared transmission channel (SCH1, SCH2, SCH3), in which transmission information about data to be subsequently transmitted is transmitted to this further station (MS) in a message block with a multiplicity of information items before the data transmission,
**characterized in that**
- the signalling device (Y) is designed to input an identification information item (DSF) for identifying the transmission of data in the message block before its transmission, and **in that**
- a transmitting device for transmitting a signalling channel (DLCCH), physically separated from the transmission channel DL, is set up with an identification information item (DSF) before the data transmission for the respective signalling of later transmission of data.

## Revendications

1. Procédé pour la signalisation d'une transmission de données par une station de base (BS) gérant des ressources d'un canal de transmission (UL, DL) vers une station d'abonné (MS) qui y est enregistrée, dans un mode de fonctionnement avec un canal de transmission (SCH1, SCH2, SCH3) utilisé en commun,
- des informations de transmission sur les données à transmettre subséquemment étant transmises à la station d'abonné (MS) enregistrée, avant la transmission des données dans un bloc de communication ayant une pluralité d'informations,
**caractérisé**
- **en ce que**, dans le bloc de communication, une information d'identification (DSF) pour la caractérisation de la transmission ultérieure des données est affectée à une certaine station d'abonné (MS) enregistrée, et
- **en ce que**, subséquemment (t₀, tₓ), une telle transmission de données est respectivement annoncée dans un canal de signalisation (DLCCH), séparé physiquement du canal de transmission (SCH1, SCH2, SCH3), par l'émission de l'information d'identification (DSF) avant la transmission de données proprement dite.

2. Procédé selon la revendication 1, dans lequel
l'information d'identification (DSF) est communiquée lors de l'opération d'enregistrement ou après l'opération d'enregistrement de la station d'abonné (MS) enregistrée.

3. Procédé selon la revendication 1, dans lequel
l'information d'identification (DSF), lors du souhait de commutation de la station d'abonné (MS) enregistrée, dans le procédé avec transmission de données, est affectée avec transmission de données après l'affectation de l'information d'identification (DSF).

4. Procédé selon une revendication précédente quelconque, dans lequel les données émises reçoivent une information d'affectation à la station d'abonné (MS) enregistrée, à laquelle elles sont destinées, exclusivement par l'émission de l'information d'identification (DSF).

5. Procédé selon une revendication précédente quelconque, dans lequel, avec l'information d'identification (DSF), il est fait renvoi à une ou à plusieurs ressources physiques du canal de transmission (SCH1, SCH2, SCH3) pouvant être utilisé en commun.

6. Procédé selon une revendication précédente quelconque, dans lequel l'affectation de l'information d'identification (DSF) est réalisée pour une durée prédéfinie, et est notamment subdivisée en périodes de transmission.

7. Procédé selon une revendication précédente quelconque, dans lequel la station d'abonné (MS) enregistrée, après l'entrée en mode de fonctionnement avec le canal de transmission utilisé en commun, écoute de manière continue le canal de signalisation (DLCCH), tant qu'elle se trouve dans ce mode de fonctionnement.

8. Procédé selon une revendication précédente quelconque, dans lequel au moins toutes les ressources de sens de liaison descendante exploitées pour le mode de fonctionnement avec le canal de transmission (SCH1, SCH2, SCH3) utilisé en commun sont numérotées.

9. Procédé selon la revendication 8, dans lequel
la numérotation est communiquée aux stations d'abonnés (MS) enregistrées se trouvant en mode de fonctionnement avec le canal de transmission (SCH1, SCH2, SCH3) utilisé en commun.

10. Station de base (BS) d'un système de radiocommunication, notamment pour la réalisation d'un procédé selon une revendication précédente, comprenant
- un dispositif de gestion destiné à gérer les ressources d'un canal de transmission (UL, DL), et
- un dispositif de signalisation (Y) pour la signalisation d'une transmission de données à au moins une autre station (MS), dans un mode de fonctionnement avec un canal de transmission (SCH1, SCH2, SCH3) utilisé en commun, des informations de transmission sur les données à transmettre subséquemment étant transmises à cette autre station (MS) avant la transmission des données dans un bloc de communication ayant une pluralité d'informations,
**caractérisé**
- **en ce que** le dispositif de signalisation (Y) est exécuté pour enregistrer une information d'identification (DSF) pour la caractérisation de la transmission de données dans le bloc de communication avant la transmission de celui-ci, et
- **en ce qu'**un dispositif d'émission est aménagé pour émettre un canal de signalisation (DLCCH), séparé physiquement du canal de transmission (DL), ayant une information d'identification (DSF) pour la signalisation respective d'une transmission ultérieure de données avant la transmission de données.
